# EUROPEAN PATENT SPECIFICATION

(11) **EP 3 985 575 B1**
(45) Date of publication and mention of the grant of the patent: **11.09.2024**
(21) Application number: 21819711.9
(22) Date of filing: 21.06.2021
(51) Int. Cl.: G06N 3/08, G06T 7/73

(54) **THREE-DIMENSIONAL INFORMATION PROCESSING METHOD AND APPARATUS**
VERFAHREN UND VORRICHTUNG ZUR DREIDIMENSIONALEN INFORMATIONSVERARBEITUNG
PROCÉDÉ ET APPAREIL DE TRAITEMENT D'INFORMATIONS TRIDIMENSIONNELLES

(30) Priority: 18.08.2020 CN 202010833398
(43) Date of publication of application: 20.04.2022
(73) Proprietor: Guangzhou Xiaopeng Motors Technology Co., Ltd., Guangzhou, Guangdong 510000 (CN)
(72) Inventor: MAO, Yunxiang, Guangzhou, Guangdong 510725 (CN); LIU, Langechuan, Guangzhou, Guangdong 510725 (CN)
(74) Representative: DREISS Patentanwälte PartG mbB
(86) International application number: PCT/CN2021/101352
(87) International publication number: WO 2022/037240

(56) References cited:
- EP-B1- 2 345 003
- CN-A- 101 667 303
- CN-A- 110 020 633
- CN-A- 110 291 358
- CN-A- 110 514 140
- CN-A- 110 826 499
- CN-A- 111 127 540
- CN-A- 111 179 300
- CN-A- 111 964 606
- TW-A- 200 910 263
- TW-A- 202 013 009
- LOPEZ JAVIER GARCIA ET AL: "Vehicle pose estimation via regression of semantic points of interest", 2019 11TH INTERNATIONAL SYMPOSIUM ON IMAGE AND SIGNAL PROCESSING AND ANALYSIS (ISPA), IEEE, 23 September 2019 (2019-09-23), pages 209 - 214, XP033634376, DOI: 10.1109/ISPA.2019.8868508
- CHOE JAESUNG ET AL: "Segment2Regress: Monocular 3D Vehicle Localization in Two Stages", ROBOTICS: SCIENCE AND SYSTEMS 2019, 22 June 2019 (2019-06-22), Freiburg im Breisgau, pages 1 - 10, XP055957835, Retrieved from the Internet <URL:http://www.roboticsproceedings.org/rss15/p16.pdf> [retrieved on 20220905]
- TANG ZHENG ET AL: "PAMTRI: Pose-Aware Multi-Task Learning for Vehicle Re-Identification Using Highly Randomized Synthetic Data", 2019 IEEE/CVF INTERNATIONAL CONFERENCE ON COMPUTER VISION (ICCV), IEEE, 27 October 2019 (2019-10-27), pages 211 - 220, XP033723398, DOI: 10.1109/ICCV.2019.00030

## Description

The present application claims priority to Chinese Patent Application No. 202010833398.2, filed with China National Intellectual Property Administration on August 18, 2020, titled "METHOD AND APPARATUS FOR PROCESSING THREE-DIMENSIONAL INFORMATION".

### FIELD

The present disclosure relates to the field of data processing, and more particularly, to a method and an apparatus for processing three-dimensional information.

### BACKGROUND

At present, as for obtaining of three-dimensional information of an object on a road, a method of performing three-dimensional information labeling on the object using a lidar, or directly performing three-dimensional information labeling by adjusting a projection of a three-dimensional object in a real picture is usually adopted.

Due to high costs of lidar installation, and hardware support and a great manpower demand required for using the lidar, not all vehicles are equipped with a lidar; and the labeling by adjusting the projection of the three-dimensional object requires a manual adjustment of the projection until complete coincidence of the projection is reached, which has a low efficiency and cannot guarantee the quality of the labeling.

Methods for obtaining three-dimensional information of an object on a road are disclosed in: Lopez et al., "Vehicle pose estimation via regression of semantic points of interest", ISPA 2019, DOI: 10.1109/ ISPA.2019.8868508; or Choe et al., "Segment2Regress: Monocular 3D Vehicle Localization in Two Stages", Robotics: Science and Systems 2019, URL: http://www.roboticsproceedings.org/rss15/p16.pdf.

Moreover, a method for synthetic vehicle training data generation is disclosed in Tang et al., "PAMTRI: Pose-Aware Multi-Task Learning for Vehicle Re-Identification Using Highly Randomized Synthetic Data", ICCV2019, DOI: 10.1109/ICCV.2019.00030.

### SUMMARY

In view of the above problems, a method and an apparatus for processing three-dimensional information are provided to overcome or at least partially solve the above problems.

A method for processing three-dimensional information is provided. The method includes: obtaining target image data for a target three-dimensional object, the target image data being a real picture of the target three-dimensional object; obtaining first sample two-dimensional projection information and first sample three-dimensional information of first sample three-dimensional objects, the first sample two-dimensional projection information including object contour information and feature point information of the first sample three-dimensional objects; performing model training based on the first sample two-dimensional projection information and the first sample three-dimensional information to obtain a first data model, by using the first sample two-dimensional projection information as input data of the first data model to be trained and the first sample three-dimensional information as output data of the first data model to be trained; obtaining third sample image data for third sample three-dimensional objects, the third sample image data being real pictures of the third sample three-dimensional objects; determining third sample two-dimensional projection information of the third sample three-dimensional objects from the third sample image data; obtaining third sample three-dimensional information of the third sample three-dimensional objects by performing a model processing on the third sample two-dimensional projection information using the first data model, the third sample two-dimensional projection information including object contour information and feature point information of the third sample three-dimensional objects; performing model training based on the third sample image data and the third sample three-dimensional information to obtain a third data model, by using the third sample image data as input data of the third data model to be trained and the third sample three-dimensional information as output data of the third data model to be trained; and obtaining target three-dimensional information of the target three-dimensional object by inputting the target image data into the third data model.

Optionally, said obtaining the first sample two-dimensional projection information of the first sample three-dimensional objects includes: labeling feature points on the first sample three-dimensional objects; generating first sample image data for the first sample three-dimensional objects; and determining the first sample two-dimensional projection information of the first sample three-dimensional objects from the first sample image data.

An apparatus for processing three-dimensional information is provided. The apparatus includes: a target image data obtaining module configured to obtain target image data for a target three-dimensional object, the target image data being a real picture of the target three-dimensional object; a first sample two-dimensional projection information and first sample three-dimensional information obtaining module configured to obtain first sample two-dimensional projection information and first sample three-dimensional information of first sample three-dimensional objects, the first sample two-dimensional projection information including object contour information and feature point information of the first sample three-dimensional objects; a first data model obtaining module configured to perform model training based on the first sample two-dimensional projection information and the first sample three-dimensional information to obtain a first data model, by using the first sample two-dimensional projection information as input data of the first data model to be trained and the first sample three-dimensional information as output data of the first data model to be trained; a third sample image data obtaining module configured to obtain third sample image data for third sample three-dimensional objects, the third sample image data being real pictures of the third sample three-dimensional objects; a third sample two-dimensional projection information determining module configured to determine third sample two-dimensional projection information of the third sample three-dimensional objects from the third sample image data, the third sample two-dimensional projection information including object contour information and feature point information of the third sample three-dimensional objects; a third sample three-dimensional information obtaining module configured to obtain third sample three-dimensional information of the third sample three-dimensional objects by performing a model processing on the third sample two-dimensional projection information using the first data model; a third data model obtaining module configured to perform model training based on the third sample image data and the third sample three-dimensional information to obtain a third data model, by using the third sample image data as input data of the third data model to be trained and the third sample three-dimensional information as output data of the third data model to be trained; and a target three-dimensional information determining module configured to obtain target three-dimensional information of the target three-dimensional object by inputting the target image data into the third data model.

While not being covered by the claims, a server is provided. The server includes a processor, a memory, and a computer program stored on the memory and executable on the processor. The computer program, when executed by the processor, implements the method for processing the three-dimensional information as described above.

A computer-readable storage medium is provided. The storage medium has a computer program stored thereon, The computer program, when executed by a processor, implements the method for processing the three-dimensional information as described above.

Embodiments of the present disclosure have the following advantages.

According to embodiments of the present disclosure, the target image data for the target three-dimensional object is obtained, the target two-dimensional projection information of the target three-dimensional object is determined from the target image data, and further, the target three-dimensional information of the target three-dimensional object is obtained based on the target two-dimensional projection information. In this way, the three-dimensional information labeling is optimized. Also, the three-dimensional information is obtained based on the two-dimensional information of the three-dimensional object, which avoids the dependence on a lidar and improves the efficiency and quality of the three-dimensional information labeling.

The above description is merely an overview of the technical solutions of the present disclosure. In order to provide a clear understanding of the technical means of the present disclosure so as to practice in accordance with the content of the present disclosure, and to make the above and other objects, features and advantages of the present disclosure more apparent and more understandable, specific embodiments of the present disclosure will be described below

### BRIEF DESCRIPTION OF DRAWINGS

In order to clearly explain technical solutions of embodiments of the present disclosure or the related art, drawings used in the description of the embodiments or the related art are briefly described below. Apparently, the drawings as described below are merely some embodiments of the present disclosure. Based on these drawings, other drawings can be obtained by those skilled in the art without creative effort.
FIG. 1 is a flowchart of steps of a method for processing three-dimensional information according to an example useful for understanding but not covered by the present invention.
FIG. 2 is a flowchart of steps of another method for processing three-dimensional information according another example useful for understanding but not covered by the present invention.
FIG. 3 is a schematic diagram of an example of model training according to p yet another example useful for understanding but not covered by the present invention.
FIG. 4 is a flowchart of steps of yet another method for processing three-dimensional information according to a further example useful for understanding but not covered by the present invention.
FIG. 5 is a schematic diagram of another example of model training useful for understanding but not covered by the present invention.
FIG. 6 is a flowchart of steps of a method for processing three-dimensional information according to an embodiment of the present disclosure;
FIG. 7 is a schematic diagram of yet another example of model training according to an embodiment of the present disclosure; and
FIG. 8 is a schematic structural diagram of an apparatus for processing three-dimensional information according to a further example useful for understanding but not covered by the present invention.

### DESCRIPTION OF EMBODIMENTS

In order to make the objects, technical solutions, and advantages of the embodiments of the present disclosure clearer, the technical solutions according to the embodiments of the present disclosure will be described clearly and completely below in conjunction with the accompanying drawings of the embodiments of the present disclosure. Apparently, the embodiments described herein are only part of, rather than all of embodiments of the present disclosure. On basis of the embodiments of the present disclosure, all other embodiments obtained by those skilled in the art without creative labor shall fall within scope of the present disclosure.

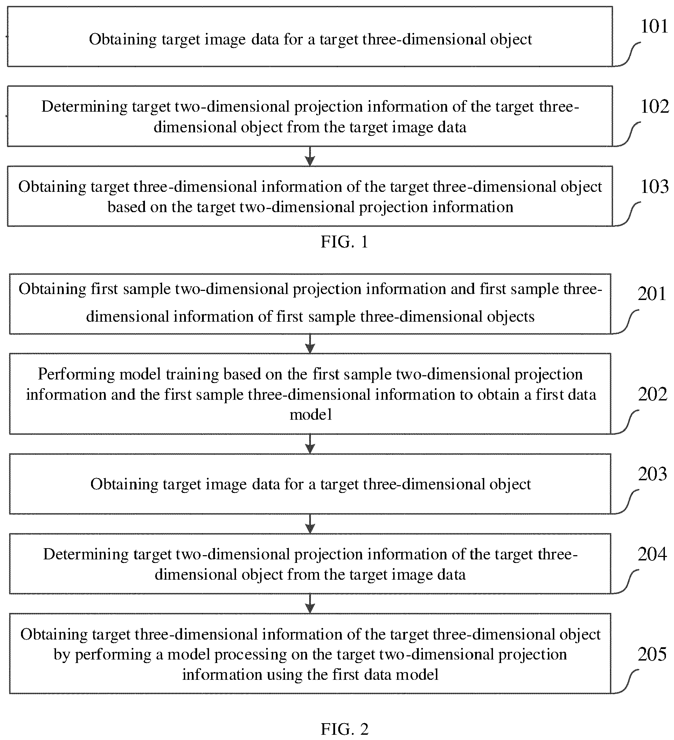

FIG. 1 illustrates a flowchart of steps of a method for processing three-dimensional information according to an example of the present disclosure. Referring to FIG. 1, the method may specifically include the following steps.

At step 101, target image data for a target three-dimensional object is obtained.

As an example, the target three-dimensional object can be an object of which three-dimensional information is to be obtained. For example, three-dimensional information of a three-dimensional object on a road can be obtained and the three-dimensional object is labeled with the three-dimensional information. The target image data can be a picture of the target three-dimensional object, e.g., a real picture of the three-dimensional object on the road can be obtained.

In a process of obtaining three-dimensional information for a three-dimensional object, for the target three-dimensional object of which three-dimensional information is to be obtained, the target image data of the target three-dimensional object can be obtained, and the three-dimensional information is then obtained from the target image data.

For example, the real picture of the three-dimensional object on the road is obtained, and the three-dimensional information of the three-dimensional object can be obtained based on the real picture for three-dimensional information labeling.

At step 102, target two-dimensional projection information of the target three-dimensional object is determined from the target image data.

As an example, the target two-dimensional projection information may include any one or more of object contour information and feature point information, e.g., a two-dimensional frame (an object contour frame) and object feature points of a projection of the three-dimensional object in a two-dimensional picture.

The obtained target image data can include projection information for the target three-dimensional object, and thus the object contour information and the feature point information of the projection of the target three-dimensional object can be obtained from the target image data and are used as the target two-dimensional projection information.

For example, on the basis of the real picture of the three-dimensional object on the road, two-dimensional projection information such as the two-dimensional frame and the object feature points for the three-dimensional object can be obtained by a model, or the two-dimensional frame and the object feature points for the three-dimensional object can be manually labeled.

At step 103, target three-dimensional information of the target three-dimensional object is obtained based on the target two-dimensional projection information.

As an example, the target three-dimensional information may include object size calculation information, object pose calculation information, and object position calculation information of the target three-dimensional object, e.g., a length, a width, and a height of the object, a position of the object in a three-dimensional space, and an attitude angle of the obj ect.

After the target two-dimensional projection information is determined, the target two-dimensional projection information can be input into a model trained for obtaining three-dimensional information of an object, so as to obtain the target three-dimensional information of the target three-dimensional object based on the target two-dimensional projection information.

For example, the obtained three-dimensional information of the three-dimensional object may include a length, a width, and a height of the three-dimensional object (i.e., the object size calculation information), a position of the three-dimensional object in a three-dimensional space (i.e., the object position calculation information, such as a spatial position characterized by X, Y, and Z), and a pose of the three-dimensional object (i.e., the object pose calculation information, such as a pitch angle, a yaw angle, and a roll angle).

In an example, the target three-dimensional information of the target three-dimensional object is obtained. The target three-dimensional information maybe expressed in different manners. Alternatively, three-dimensional information of a part of the target three-dimensional object is obtained.

According to the examples of the present disclosure, the target image data for the target three-dimensional object is obtained, the target two-dimensional projection information of the target three-dimensional object is determined from the target image data, and further, the target three-dimensional information of the target three-dimensional object is obtained based on the target two-dimensional projection information. In this way, the three-dimensional information labeling is optimized. Also, obtaining the three-dimensional information of the three-dimensional object based on the two-dimensional information of the three-dimensional object avoids the dependence on a lidar and improves the efficiency and quality of the three-dimensional information labeling.

FIG. 2 illustrates a flowchart of steps of another method for processing three-dimensional information according to an example of the present disclosure. Referring to FIG. 2, the method may specifically include the following steps.

At step 201, first sample two-dimensional projection information and first sample three-dimensional information of first sample three-dimensional objects are obtained.

As an example, the first sample three-dimensional objects may be three-dimensional models configured to train a three-dimensional information calculation model. For example, three-dimensional models of different objects (e.g., a car three-dimensional model, a Sport Utility Vehicle (SUV) three-dimensional model) can be obtained.

In a process of training the three-dimensional information calculation model, for the first sample three-dimensional objects used for training the three-dimensional information calculation model, two-dimensional projection information and three-dimensional information of the first sample three-dimensional objects can be obtained as the first sample two-dimensional projection information and the first sample three-dimensional information, and then the first sample two-dimensional projection information and the first sample three-dimensional information can be used for model training.

In an example of the present disclosure, said obtaining the first sample two-dimensional projection information of the first sample three-dimensional objects may include the following sub-steps.

At sub-step 11, feature points on the first sample three-dimensional objects are labeled.

As an example, a feature point may be an object feature point for a three-dimensional model. The feature point labeling may be performed on the three-dimensional model configured for training the three-dimensional information calculation model. For example, the feature point labeling may be performed on a wheel and a lamp in a vehicle three-dimensional model.

In a process of training the three-dimensional information calculation model, the three-dimensional models configured for training the three-dimensional information calculation model can be obtained as sample three-dimensional objects, and then the feature point labeling can be performed on the sample three-dimensional objects.

At sub-step 12, first sample image data for the first sample three-dimensional objects is generated.

As an example, the first sample image data may be pictures of the first sample three-dimensional objects, e.g., two-dimensional pictures of the sample three-dimensional objects.

After the feature point labeling is performed on the first sample three-dimensional objects, the first sample three-dimensional objects can be projected in accordance with principles of intrinsic parameters of a camera, such that two-dimensional pictures of the first sample three-dimensional objects can be obtained as the first sample image data.

Specifically, three-dimensional models of objects can be placed in different positions in a three-dimensional space, and the three-dimensional models of the objects can be projected, based on principles of intrinsic parameters of the camera, on two-dimensional pictures under different poses of the three-dimensional models. According to principles of intrinsic parameters of a camera model, coordinate points in the three-dimensional space can be projected on the two-dimensional pictures through the camera, and numerical changes of the three-dimensional models of the objects during a projection process can be studied by using the camera model.

At sub-step 13, the first sample two-dimensional projection information of the first sample three-dimensional objects is determined from the first sample image data.

The obtained first sample image data can include projection information for the first sample three-dimensional objects, and thus the object contour information and the feature point information of projections of the first sample three-dimensional objects can be obtained from the first sample image data and are used as the first sample two-dimensional projection information.

For example, projecting the three-dimensional models of the objects on the two-dimensional pictures can generate object contour frames and feature points for the three-dimensional models. The three-dimensional models of the objects can be arbitrarily projected to different positions in the pictures to obtain two-dimensional projections of the three-dimensional models and key points of the three-dimensional models.

In an example, the object contour frame can be a smallest rectangle that can enclose a projection of the three-dimensional model of the object, and can be expressed by positions of four sides thereof in the picture. When the vehicle three-dimensional model is adopted, the feature points can include coordinates of points at which two tires on a side of the vehicle touch the ground and which are presented in the picture, and coordinates of a plurality of edge lines of a vehicle body that are presented in the picture.

At step 202, model training is performed based on the first sample two-dimensional projection information and the first sample three-dimensional information to obtain a first data model.

As an example, three-dimensional information of an object can be obtained based on two-dimensional projection information of the object by using the first data model. For example, a two-dimensional information based three-dimensional information calculation model can be obtained through training. The three-dimensional information calculation model can use the two-dimensional frame and feature point positions of the object as inputs to output the three-dimensional information of the object.

After the first sample two-dimensional projection information and the first sample three-dimensional information are obtained, the model training can be performed by using the first sample two-dimensional projection information as input data of the three-dimensional information calculation model to be trained and using the first sample three-dimensional information as output data of the three-dimensional information calculation model to be trained, such that the first data model can be obtained. Three-dimensional information of an object can be obtained based on two-dimensional projection information of the object by using the first data model.

For example, two-dimensional frames and feature point positions of objects can be used as input data. The two-dimensional frames and feature point coordinates of the objects can be combined into vectors which are used as input data of a three-dimensional information calculation model, and three-dimensional information of the objects can be used as output data, so as to train a two-dimensional information based three-dimensional information calculation model.

In an example, the three-dimensional information calculation model may be a neural network model. The neural network model may adopt an L1-norm loss function, and neural network parameters in the model may be updated through back propagation until convergence.

In another example, during training or an application of the three-dimensional information calculation model, different variables can be used as the input data. For example, a feature surface (such as a door, a window, etc.) of the vehicle three-dimensional model can be used, and the two-dimensional frame and the feature points can also have different forms of expression.

At step 203, target image data for a target three-dimensional object is obtained.

In a process of obtaining three-dimensional information for a three-dimensional object, as for the target three-dimensional object of which three-dimensional information is to be obtained, the target image data of the target three-dimensional object can be obtained, and then the three-dimensional information can be obtained from the target image data.

At step 204, target two-dimensional projection information of the target three-dimensional object is determined from the target image data.

The obtained target image data can include projection information for the target three-dimensional object, and thus object contour information and feature point information of a projection of the target three-dimensional object can be obtained from the target image data and are used as the target two-dimensional projection information.

At step 205, target three-dimensional information of the target three-dimensional object is obtained by performing a model processing on the target two-dimensional projection information using the first data model.

After the target two-dimensional projection information is determined, the target two-dimensional projection information can be used as input data of the first data model, and thus the target three-dimensional information of the target three-dimensional object can be obtained by performing a model processing on the target two-dimensional projection information using the first data model.

In an example, virtual three-dimensional object models are projected on two-dimensional pictures to obtain two-dimensional frames and feature points for training a three-dimensional information calculation model, such that three-dimensional information of an object can be obtained. In the process of training the three-dimensional information calculation model, feature points of three-dimensional models of objects only need to be labeled once, and further, two-dimensional frames and feature points that are obtained through projections on the two-dimensional pictures can be used to train the two-dimensional information based three-dimensional information calculation model. Three-dimensional information of an object can be obtained by using the trained three-dimensional information calculation model.

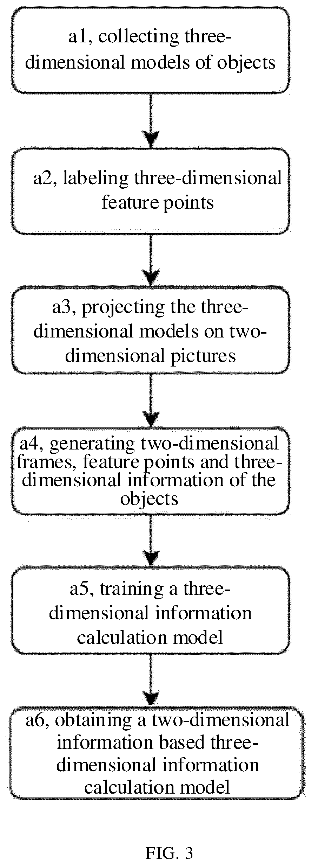

In order to provide a better understanding of the above steps for those skilled in the art, the examples of the present disclosure are exemplarily described in conjunction with FIG. 3, but it should be understood that the examples of the present disclosure are not limited thereto.

Regarding the three-dimensional information calculation model, the model training can be carried out through the following procedures.

At block a1, three-dimensional models of objects are collected (i.e., the first sample three-dimensional objects).

At block a2, three-dimensional feature points are labeled for the three-dimensional models of the objects.

At block a3, the three-dimensional models are projected on two-dimensional pictures (i.e., the first sample image data).

At block a4, object two-dimensional frames and object feature points (i.e., the first sample two-dimensional projection information) and three-dimensional information (i.e., the first sample three-dimensional information) for the three-dimensional models of the objects are generated.

At block a5, a three-dimensional information calculation model is trained by using the object two-dimensional frames and object feature points as input data and the three-dimensional information as output data.

At block a6, after the model training is completed, a two-dimensional information based three-dimensional information calculation model (i.e., the first data model) is obtained.

In the examples of the present disclosure, the first sample two-dimensional projection information and the first sample three-dimensional information of the first sample three-dimensional objects are obtained, and the model training is performed based on the first sample two-dimensional projection information and the first sample three-dimensional information to obtain the first data model; and further, the target image data for the target three-dimensional object is obtained, the target two-dimensional projection information of the target three-dimensional object is determined from the target image data, and the target three-dimensional information of the target three-dimensional object is obtained based on the target two-dimensional projection information. In this way, with the three-dimensional information calculation model, the three-dimensional information can be obtained based on the two-dimensional information of the three-dimensional object, which avoids the dependence on a lidar and improves the efficiency and quality of the three-dimensional information labeling.

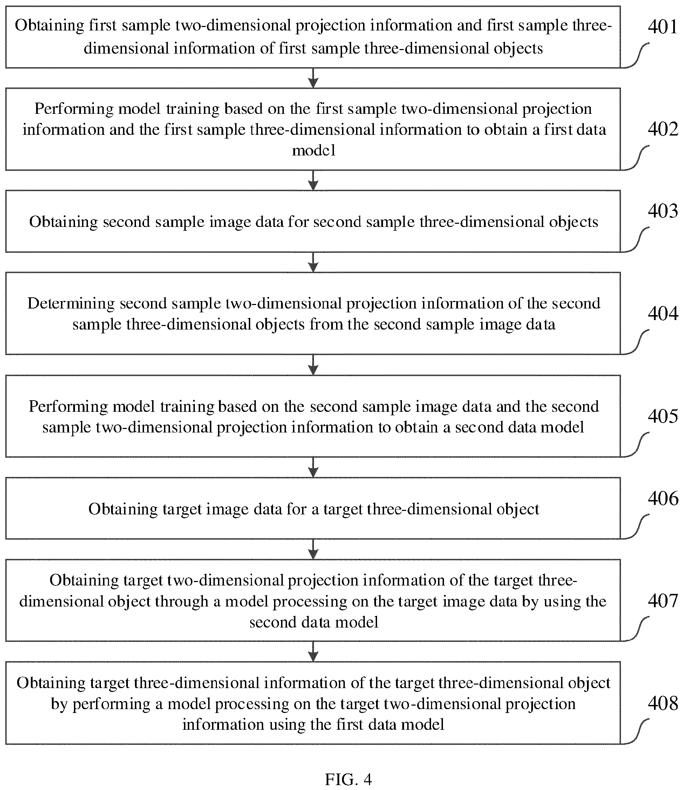

FIG. 4 illustrates a flowchart of steps of yet another method for processing three-dimensional information according to an example of the present disclosure, Referring to FIG. 4, the method which may specifically include the following steps.

At step 401, first sample two-dimensional projection information and first sample three-dimensional information of first sample three-dimensional objects are obtained.

In the process of training of a three-dimensional information calculation model, for the first sample three-dimensional objects used for training the three-dimensional information calculation model, the two-dimensional projection information and the three-dimensional information of the first sample three-dimensional objects can be obtained as the first sample two-dimensional projection information and the first sample three-dimensional information, and then the first sample two-dimensional projection information and the first sample three-dimensional information can be used for the model training.

At step 402, model training is performed based on the first sample two-dimensional projection information and the first sample three-dimensional information to obtain a first data model.

After the first sample two-dimensional projection information and the first sample three-dimensional information are obtained, the model training can be performed by using the first sample two-dimensional projection information as input data of the three-dimensional information calculation model to be trained and the first sample three-dimensional information as output data of the three-dimensional information calculation model to be trained, such that the first data model can be obtained. Three-dimensional information of an object can be obtained based on two-dimensional projection information of the object by using the first data model.

At step 403, second sample image data for second sample three-dimensional objects is obtained.

As an example, the second sample three-dimensional objects are three-dimensional models used for training a two-dimensional information calculation model; and the second sample image data may be pictures of the second sample three-dimensional objects, e.g., real two-dimensional pictures of the sample three-dimensional objects.

In a process of training the two-dimensional information calculation model, for the second sample three-dimensional objects used for training the two-dimensional information calculation model, the real two-dimensional pictures of the second sample three-dimensional objects can be obtained as the second sample image data. For example, the two-dimensional information calculation model can be trained by collecting real two-dimensional pictures.

At step 404, second sample two-dimensional projection information of the second sample three-dimensional objects is determined from the second sample image data.

The obtained second sample image data may include projection information for the second sample three-dimensional objects, and further, object contour information and feature point information of projections of the second sample three-dimensional objects can be obtained from the second sample image data and are used as the second sample two-dimensional projection information.

For example, two-dimensional frames and feature points of the objects can be manually labeled in the real two-dimensional pictures, and then the two-dimensional frames and feature points of the objects can be used for training of the two-dimensional model.

At step 405, model training is performed based on the second sample image data and the second sample two-dimensional projection information to obtain a second data model.

As an example, two-dimensional projection information of objects can be obtained based on two-dimensional pictures of the objects by using the second data model. For example, the two-dimensional information calculation model can be obtained through training. The two-dimensional information calculation model can use a two-dimensional picture of an object as an input and output two-dimensional projection information of the object.

After the second sample image data and the second sample two-dimensional projection information are obtained, the model training can be performed by using the second sample image data as input data of the two-dimensional information calculation model to be trained and the second sample two-dimensional projection information as output data of the two-dimensional information calculation model to be trained, such that the second data model can be obtained. Two-dimensional projection information of an object can be obtained based on a two-dimensional picture of the object by using the second data model.

At step 406, target image data for a target three-dimensional object is obtained.

In the process of obtaining three-dimensional information for a three-dimensional object, for a target three-dimensional object of which three-dimensional information is to be obtained, target image data of the target three-dimensional object can be obtained, and then the three-dimensional information of the target three-dimensional object can be obtained from the target image data.

At step 407, target two-dimensional projection information of the target three-dimensional object is obtained by performing a model processing on the target image data using the second data model.

After the target image data is obtained, the target image data can be used as input data of the second data model, and further, the target two-dimensional projection information of the target three-dimensional object can be obtained by performing the model processing on the target image data using the second data model.

At step 408, target three-dimensional information of the target three-dimensional object is obtained by performing a model processing on the target two-dimensional projection information using the first data model.

After the target two-dimensional projection information is determined, the target two-dimensional projection information can be used as input data of the first data model, and the target three-dimensional information of the target three-dimensional object can be obtained by performing the model processing on the target two-dimensional projection information using the first data model.

In an example, a two-dimensional information based three-dimensional information calculation model can be used for offline labeling of three-dimensional information of an object, and used as a real-time post-processing module of the two-dimensional information calculation model for performing a three-dimensional information calculation.

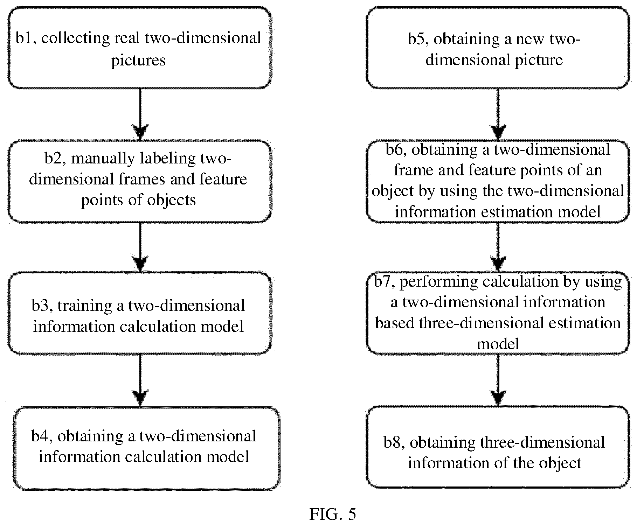

In order to provide a better understanding of the above steps for those skilled in the art, the examples of the present disclosure are exemplarily described in conjunction with FIG. 5, but it should be understood that the examples of the present disclosure are not limited thereto.

Regarding the two-dimensional information calculation model, model training can be carried out through the following procedures.

At block b1, real two-dimensional pictures can be collected (i.e., the second sample image data).

At block b2, two-dimensional frames and feature points (i.e., the second sample two-dimensional projection information) of objects (i.e., the second sample three-dimensional objects) in the pictures can be manually labeled.

At block b3, a two-dimensional information calculation model can be trained by using the real two-dimensional pictures as input data and the two-dimensional frames and the feature points as output data.

At block b4, after the model training is completed, the two-dimensional information calculation model (i.e., the second data model) can be obtained.

At block b5, when the two-dimensional information calculation model is applied in a product, a new two-dimensional picture (i.e., target image data) can be obtained.

At block b6, after the new two-dimensional picture is input into the two-dimensional information calculation model, a two-dimensional frame and feature points of an object (i.e., the target two-dimensional projection information) can be obtained.

At blocks b7 and b8, the obtained two-dimensional frame and feature points of the object can be input into a two-dimensional information based three-dimensional calculation model (i.e., the first data model) for an three-dimensional information calculation to obtain three-dimensional information (i.e., the target three-dimensional information) of the object (i.e., the target three-dimensional object).

In the examples of the present disclosure, the first sample two-dimensional projection information and the first sample three-dimensional information of the first sample three-dimensional objects are obtained, and the model training is performed based on the first sample two-dimensional projection information and the first sample three-dimensional information to obtain the first data model; further, the second sample image data for the second sample three-dimensional objects is obtained, the second sample two-dimensional projection information of the second sample three-dimensional objects is determined from the second sample image data, and the model training is performed based on the second sample image data and the second sample two-dimensional projection information to obtain the second data model; further, the target image data for the target three-dimensional object is obtained, the target two-dimensional projection information of the target three-dimensional object is obtained by performing the model processing on the target image data using the second data model, and the target three-dimensional information of the target three-dimensional object is obtained by performing the model processing on the target two-dimensional projection information using the first data model. In this way, with the two-dimensional information calculation model and the three-dimensional information calculation model, a real-time calculation of the three-dimensional information can be performed, which improves the efficiency and quality of the labeling of the three-dimensional information

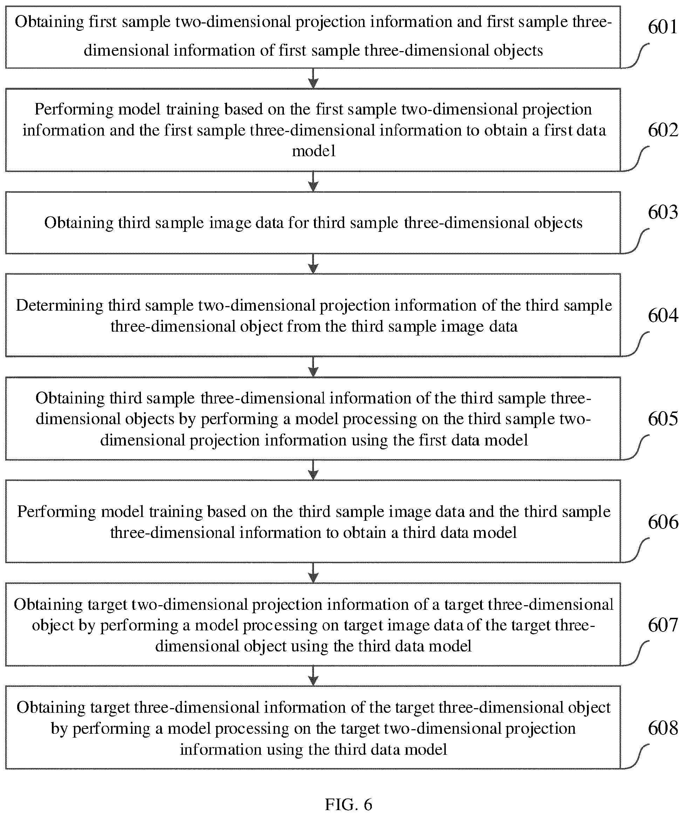

FIG. 6 illustrates a flowchart of steps of a method for processing three-dimensional information according to an embodiment of the present disclosure. Referring to FIG. 6, the method may specifically include the following steps.

At step 601, first sample two-dimensional projection information and first sample three-dimensional information of first sample three-dimensional objects are obtained.

In the process of training a three-dimensional information calculation model, for the first sample three-dimensional objects used for training the three-dimensional information calculation model, the two-dimensional projection information and the three-dimensional information of the first sample three-dimensional objects can be obtained as the first sample two-dimensional projection information and the first sample three-dimensional information, and then the first sample two-dimensional projection information and the first sample three-dimensional information can be used for the model training.

At step 602, model training is performed based on the first sample two-dimensional projection information and the first sample three-dimensional information to obtain a first data model.

After the first sample two-dimensional projection information and the first sample three-dimensional information are obtained, the model training can be performed by using the first sample two-dimensional projection information as input data of the three-dimensional information calculation model to be trained and the first sample three-dimensional information as output data of the three-dimensional information calculation model to be trained, such that the first data model can be obtained. Three-dimensional information of an object can be obtained based on two-dimensional projection information of the object by using the first data model.

At step 603, third sample image data for third sample three-dimensional objects is obtained.

As an example, the third sample three-dimensional objects are three-dimensional models used for training of a three-dimensional information calculation model; and the third sample image data may be pictures for the third sample three-dimensional objects, e.g., real pictures of the third sample three-dimensional objects.

In a process of training the three-dimensional information calculation model, for the third sample three-dimensional objects used for training the three-dimensional information calculation model, the real pictures of the third sample three-dimensional objects may be obtained as the third sample image data. For example, a real picture based three-dimensional information calculation model can be trained by collecting real pictures.

At step 604, third sample two-dimensional projection information of the third sample three-dimensional objects is determined from the third sample image data.

The obtained third sample image data may include projection information of the third sample three-dimensional objects, and object contour information and feature point information of proj ections of the third sample three-dimensional objects can be obtained from the third sample image data, and used as the third sample two-dimensional projection information.

For example, two-dimensional frames and feature points of the objects can be manually labeled in the real pictures, and the three-dimensional information of the objects can be obtained by using the two-dimensional frames and the feature points of the objects.

At step 605, third sample three-dimensional information of the third sample three-dimensional objects is obtained by performing a model processing on the third sample two-dimensional projection information using the first data model.

After the third sample two-dimensional projection information is determined, the third sample two-dimensional projection information can be used as input data of the first data model, and thus the third sample three-dimensional information of the third sample three-dimensional objects can be obtained by performing the model processing on the third sample two-dimensional projection information using the first data model.

At step 606, model training is performed based on the third sample image data and the third sample three-dimensional information to obtain a third data model.

As an example, three-dimensional information of an object can be obtained based on a real picture of the object by using the third data model. For example, a real picture based three-dimensional information calculation model can be obtained through training, and the three-dimensional information calculation model can use a real picture of an object as an input to output three-dimensional information of the object.

After the third sample image data and the third sample three-dimensional information are obtained, model training can be performed by using the third sample image data as input data of the three-dimensional information calculation model to be trained and the third sample three-dimensional information as output data of the three-dimensional information calculation model to be trained, such that the third data model can be obtained. Three-dimensional information of an object can be obtained based on a real picture of the object by using the third data model.

At step 607, target two-dimensional projection information of a target three-dimensional object is obtained by performing a model processing on target image data of the target three-dimensional object using the third data model.

After the target image data is obtained, the target image data can be used as input data of the third data model, and thus the target two-dimensional projection information of the target three-dimensional object can be obtained by performing the model processing on the target image data using the third data model.

At step 608, target three-dimensional information of the target three-dimensional object is obtained by performing a model processing on the target two-dimensional projection information using the third data model.

After the target two-dimensional projection information is determined, the target three-dimensional information of the target three-dimensional object can be obtained by performing the model processing on the target two-dimensional projection information using the third data model.

In an example, for labeling of three-dimensional information of an object, it is only necessary to manually label a two-dimensional frame and feature points of the object in a two-dimensional picture, and the labeled two-dimensional frame and feature points can be input into the three-dimensional information calculation model to obtain three-dimensional information of the object. In this way, the dependence on a lidar is avoided, and manual efficiency of using two-dimensional image data to directly label the three-dimensional information is improved.

In another example, the trained three-dimensional information calculation model can also be used for a real-time three-dimensional information calculation of objects. Since the three-dimensional information calculation model can be trained with two-dimensional frames and feature points, rather than virtual pictures, as input data, differences between virtual pictures and real pictures are avoided, thereby solving a problem that performance of the three-dimensional information calculation model trained with virtual pictures as the input data is lowered when real pictures are input into the three-dimensional information calculation model.

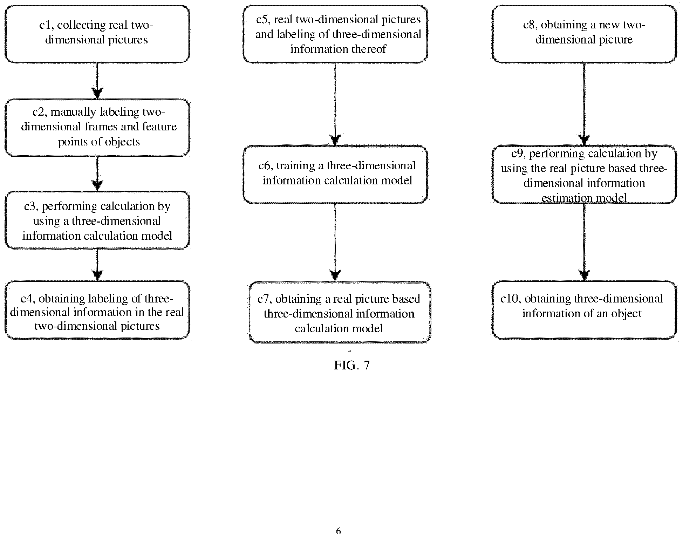

In order to provide a better understanding of the above steps for those skilled in the art, the embodiments of the present disclosure are exemplarily described in conjunction with FIG. 7, but it should be understood that the embodiments of the present disclosure are not limited thereto.

Regarding offline labeling of three-dimensional information performed by using the three-dimensional information calculation model, the labeling can be carried out through the following procedures.

At blocks c1 and c2, real pictures (i.e., the third sample image data) can be collected, and two-dimensional frames and feature points of objects (i.e., the third sample two-dimensional projection information) can be manually labeled.

At blocks c3 and c4, the labeled two-dimensional frames and feature points of the objects can be input into a two-dimensional information based three-dimensional calculation model (i.e., the first data model) to obtain three-dimensional information (i.e., the third sample three-dimensional information) of the objects (i.e., the third sample three-dimensional obj ects).

Regarding a real picture based three-dimensional information calculation model, the model training can be carried out through the following procedures.

At blocks c5 to c7, a real picture based three-dimensional information calculation model (i.e., the third data model) can be obtained through training based on the real pictures (i.e., the third sample image data) collected in block c1 as input data and the three-dimensional information obtained in block c4 (i.e., the third sample three-dimensional information) as output data.

The real picture based three-dimensional information calculation model can be applied through the following procedures.

At block c8, a new real two-dimensional picture (i.e., the target image data) can be obtained.

At block c9, the new real two-dimensional picture can be input into the real picture based three-dimensional information calculation model (i.e., the third data model) obtained in block c7 for calculation.

At block c10, three-dimensional information (i.e., the target three-dimensional information) of an object (i.e., the target three-dimensional object) can be obtained.

In the embodiments of the present disclosure, the first sample two-dimensional projection information and the first sample three-dimensional information of the first sample three-dimensional objects are obtained, and the model training is performed based on the first sample two-dimensional projection information and the first sample three-dimensional information to obtain the first data model; further, the third sample image data for the third sample three-dimensional objects is obtained, the third sample two-dimensional projection information of the third sample three-dimensional objects is determined from the third sample image data, the third sample three-dimensional information of the third sample three-dimensional objects is obtained by performing the model processing on the third sample two-dimensional projection information using the first data model, and the model training is performed based on the third sample image data and the third sample three-dimensional information to obtain the third data model; and further, the target two-dimensional projection information of the target three-dimensional object is obtained by performing the model processing on the target image data using the third data model, and the target three-dimensional information of the target three-dimensional object is obtained by performing the model processing on the target two-dimensional projection information using the third data model. In this way, the three-dimensional information labeling of the object can be performed by using the real picture based three-dimensional information calculation model. Also, obtaining the three-dimensional information based on the real picture of the three-dimensional object avoids the dependence on a lidar and improves the efficiency and quality of the labeling of the three-dimensional information.

It should be noted that, in order to simplify description the present disclosure, the method embodiments of the present disclosure are each expressed as a combination of a series of actions. However, those skilled in the art would appreciate that the embodiments of the present disclosure are not limited to the order of the actions, and according to the embodiments of the present disclosure, some steps may be executed in other orders or be executed simultaneously. In addition, those skilled in the art would also appreciate that the embodiments described in the specification are preferred embodiments, and actions involved therein may not be necessary for the embodiments of the present disclosure.

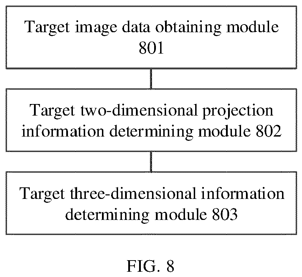

FIG. 8 is a schematic structural diagram of an apparatus for processing three-dimensional information according to an example of the present disclosure. Referring to FIG. 8, the apparatus may specifically include: a target image data obtaining module 801 configured to obtain target image data for a target three-dimensional object; a target two-dimensional projection information determining module 802 configured to determine target two-dimensional projection information of the target three-dimensional object from the target image data; and a target three-dimensional information determining module 803 configured to obtain target three-dimensional information of the target three-dimensional object based on the target two-dimensional projection information.

In an embodiment of the present disclosure, the apparatus further includes: a first sample two-dimensional projection information and first sample three-dimensional information obtaining module configured to obtain first sample two-dimensional projection information and first sample three-dimensional information of first sample three-dimensional objects; and a first data model obtaining module configured to perform model training based on the first sample two-dimensional projection information and the first sample three-dimensional information to obtain a first data model.

In an example of the present disclosure, the first sample two-dimensional projection information and first sample three-dimensional information obtaining module includes: a feature point labeling sub-module configured to perform feature point labeling on the first sample three-dimensional objects; a first sample image data generation sub-module configured to generate first sample image data for the first sample three-dimensional objects; a first sample two-dimensional projection information determining sub-module configured to determine the first sample two-dimensional projection information of the first sample three-dimensional objects from the first sample image data.

In an example of the present disclosure, the target three-dimensional information determining module 803 includes a first target three-dimensional information determining sub-module configured to obtain the target three-dimensional information of the target three-dimensional object by performing a model processing on the target two-dimensional projection information using the first data model.

In an example of the present disclosure, the apparatus further includes: a second sample image data obtaining module configured to obtain second sample image data for second sample three-dimensional objects; a second sample two-dimensional projection information determining module configured to determine second sample two-dimensional projection information of the second sample three-dimensional objects from the second sample image data; and a first data model obtaining module configured to perform model training based on the second sample image data and the second sample two-dimensional projection information to obtain a second data model.

In an example of the present disclosure, the target two-dimensional projection information determining module 802 includes a first target two-dimensional projection information determining sub-module configured to obtain the target two-dimensional projection information of the target three-dimensional object by performing a model processing on the target image data using the second data model.

In the embodiment of the present disclosure, the apparatus further includes: a third sample image data obtaining module configured to obtain third sample image data for third sample three-dimensional objects; a third sample two-dimensional projection information determining module configured to determine third sample two-dimensional projection information of the third sample three-dimensional objects from the third sample image data; a third sample three-dimensional information obtaining module configured to obtain third sample three-dimensional information of the third sample three-dimensional objects by performing a model processing on the third sample two-dimensional projection information using the first data model; and a third data model obtaining module configured to perform model training based on the third sample image data and the third sample three-dimensional information to obtain a third data model.

In an example of the present disclosure, the target two-dimensional projection information determining module 802 includes a second target two-dimensional projection information determining sub-module configured to obtain the target two-dimensional projection information of the target three-dimensional object by performing a model processing on the target image data using the third data model.

The target three-dimensional information determining module 803 includes a second target three-dimensional information determining sub-module configured to obtain the target three-dimensional information of the target three-dimensional object by performing a model processing on the target two-dimensional projection information using the third data model.

In an example of the present disclosure, the target two-dimensional projection information includes any one or more of object contour information and feature point information.

In the embodiments of the present disclosure, the target image data for the target three-dimensional object is obtained, the target two-dimensional projection information of the target three-dimensional object is determined from the target image data, and the target three-dimensional information of the target three-dimensional object is obtained based on the target two-dimensional projection information. In this way, labeling of the three-dimensional information is optimized. Also, obtaining three-dimensional information of a three-dimensional object based on two-dimensional information of the three-dimensional object avoids the dependence on a lidar and improves the efficiency and quality of the labeling of the three-dimensional information.

An example of the present disclosure further provides a server. The server may include a processor, a memory, and a computer program stored on the memory and executable on the processor. The computer program, when executed by the processor, implements the method for processing the three-dimensional information as described above.

An embodiment of the present disclosure further provides a computer-readable storage medium having a computer program stored thereon. The computer program, when executed by a processor, implements the method for processing the three-dimensional information as described above.

Since the apparatus embodiments are basically similar to the method embodiments, the description of the apparatus embodiments is relatively simple. For the related description, reference may be made to a corresponding part of the description of the method embodiments.

The respective embodiments in the specification are described in a progressive manner, and each embodiment focuses on differences from other embodiments. The same or similar parts of various embodiments can be referred to each other.

Those skilled in the art should understand that the embodiments of the present disclosure can be provided as a method, an apparatus, or a computer program product. Therefore, the embodiments of the present disclosure may adopt a form of a complete hardware embodiment, a complete software embodiment, or an embodiment combining software and hardware. In addition, the embodiments of the present disclosure may adopt a form of a computer program product implemented on one or more computer-usable storage media (including, but not limited to, disk storage, Compact Disc Read-Only Memory (CD-ROM), optical storage, etc.) including computer-usable program codes.

The embodiments of the present disclosure are described with reference to flowcharts and/or block diagrams of the method, the terminal device (system), and the computer program product according to the embodiments of the present disclosure. It should be understood that each process and/or block in the flowcharts and/or block diagrams, and a combination of processes and/or blocks in the flowcharts and/or block diagrams can be realized by computer program instructions. These computer program instructions can be provided to a processor of a general-purpose computer, a special-purpose computer, an embedded processor, or other programmable data processing terminal device to generate a machine, such that instructions executed by the processor of the computer or other programmable data processing terminal devices generate an apparatus for implementing functions specified in one or more processes in the flowchart and/or one or more blocks in the block diagram.

These computer program instructions can also be stored in a computer-readable memory that can guide a computer or other programmable data processing terminal devices to work in a specific manner, such that instructions stored in the computer-readable memory produce an article of manufacture including an instruction device. The instruction device implements functions specified in one or more processes in the flowchart and/or one or more blocks in the block diagram.

These computer program instructions can also be loaded on a computer or other programmable data processing terminal devices to enable a series of operation steps to be executed on the computer or other programmable terminal devices for producing computer-implemented processing, such that instructions executed on the computer or other programmable terminal devices provide steps for implementing functions specified in one or more processes in the flowchart and/or one or more blocks in the block diagram.

Although the preferred embodiments of the embodiments of the present disclosure are described as above, those skilled in the art can make additional changes and modifications to these embodiments once they learn the basic creative idea, as far as covered by the appended claims.

Further, it should be noted that relational terms herein, such as "first" and "second", are used only for differentiating one entity or operation from another entity or operation, and do not necessarily require or imply that any real relationship or sequence should be present between the entities or operations. Also, terms "comprise", "include" or any other variations thereof are intended to cover non-exclusive inclusion. Thus, the process, method, article or terminal device including a series of elements includes not only those elements, but also includes other elements that are not explicitly listed, or also includes inherent elements of the process, method, article or terminal device. Without specific limitations, an element expressed as "comprising/comprise a ..." or "including/include a" does not exclude the presence of additional identical elements in the process, method, article or terminal device that includes said element

The above provides detailed description of the method and apparatus for processing the three-dimensional information. Specific examples are used herein to illustrate the principles and implementations of the present disclosure. The description of the above embodiments is only used to facilitate understanding of the method and a core idea thereof of the present disclosure. In addition, for those skilled in the art, according to the idea of the present disclosure, changes can be made to the specific implementations, the scope of the invention being defined in the appended claims. In summary, the content of the specification should not be construed as limitations to the present disclosure.

## Claims

1. A computer-implemented method for processing three-dimensional information, comprising:
obtaining target image data for a target three-dimensional object, wherein the target image data is a real picture of the target three-dimensional object;
obtaining first sample two-dimensional projection information and first sample three-dimensional information of first sample three-dimensional objects, wherein the first sample two-dimensional projection information comprises object contour information and feature point information of the first sample three-dimensional objects;
performing model training based on the first sample two-dimensional projection information and the first sample three-dimensional information to obtain a first data model, by using the first sample two-dimensional projection information as input data of the first data model to be trained and the first sample three-dimensional information as output data of the first data model to be trained;
obtaining third sample image data for third sample three-dimensional objects, wherein the third sample image data is real pictures of the third sample three-dimensional objects;
determining third sample two-dimensional projection information of the third sample three-dimensional objects from the third sample image data;
obtaining third sample three-dimensional information of the third sample three-dimensional objects by performing a model processing on the third sample two-dimensional projection information using the first data model, wherein the third sample two-dimensional projection information comprises object contour information and feature point information of the third sample three-dimensional objects;
performing model training based on the third sample image data and the third sample three-dimensional information to obtain a third data model, by using the third sample image data as input data of the third data model to be trained and the third sample three-dimensional information as output data of the third data model to be trained; and
obtaining target three-dimensional information of the target three-dimensional object by inputting the target image data into the third data model.

2. The method according to claim 1, wherein said obtaining the first sample two-dimensional projection information of the first sample three-dimensional objects comprises:
labeling feature points on the first sample three-dimensional objects;
generating first sample image data for the first sample three-dimensional objects; and
determining the first sample two-dimensional projection information of the first sample three-dimensional objects from the first sample image data.

3. An apparatus for processing three-dimensional information, comprising:
a target image data obtaining module configured to obtain target image data for a target three-dimensional object, wherein the target image data is a real picture of the target three-dimensional object;
a first sample two-dimensional projection information and first sample three-dimensional information obtaining module configured to obtain first sample two-dimensional projection information and first sample three-dimensional information of first sample three-dimensional objects, wherein the first sample two-dimensional projection information comprises object contour information and feature point information of the first sample three-dimensional objects;
a first data model obtaining module configured to perform model training based on the first sample two-dimensional projection information and the first sample three-dimensional information to obtain a first data model, by using the first sample two-dimensional projection information as input data of the first data model to be trained and the first sample three-dimensional information as output data of the first data model to be trained;
a third sample image data obtaining module configured to obtain third sample image data for third sample three-dimensional objects, wherein the third sample image data is real pictures of the third sample three-dimensional objects;
a third sample two-dimensional projection information determining module configured to determine third sample two-dimensional projection information of the third sample three-dimensional objects from the third sample image data, wherein the third sample two-dimensional projection information comprises object contour information and feature point information of the third sample three-dimensional objects;
a third sample three-dimensional information obtaining module configured to obtain third sample three-dimensional information of the third sample three-dimensional objects by performing a model processing on the third sample two-dimensional projection information using the first data model;
a third data model obtaining module configured to perform model training based on the third sample image data and the third sample three-dimensional information to obtain a third data model, by using the third sample image data as input data of the third data model to be trained and the third sample three-dimensional information as output data of the third data model to be trained; and
a target three-dimensional information determining module configured to obtain target three-dimensional information of the target three-dimensional object by inputting the target image data into the third data model.

4. A computer-readable storage medium having a computer program stored thereon, wherein the computer program, when executed by a processor, implements the method for processing the three-dimensional information according to claim 1 or 2.

## Patentansprüche

1. Computerimplementiertes Verfahren zur Verarbeitung dreidimensionaler Informationen, umfassend:
Erfassen von Zielbilddaten für ein dreidimensionales Zielobjekt, wobei die Zielbilddaten ein reales Bild des dreidimensionalen Zielobjekts sind;
Erfassen von ersten Muster-zweidimensionalen Projektionsinformationen und ersten Muster-dreidimensionalen Informationen von einem ersten dreidimensionalen Musterobjekt, wobei die ersten Muster-zweidimensionalen Projektionsinformationen Objektkonturinformationen und Merkmalspunktinformationen des ersten dreidimensionalen Musterobjekts umfassen;
Durchführen eines Modelltrainings basierend auf den ersten Muster-zweidimensionalen Projektionsinformationen und den ersten Muster-dreidimensionalen Informationen, ein erstes Datenmodell zu erhalten, indem die ersten Muster-zweidimensionalen Projektionsinformationen als Eingabedaten des zu trainierenden ersten Datenmodells und die ersten Muster-dreidimensionalen Informationen als Ausgabedaten des zu trainierenden ersten Datenmodells verwendet werden;
Erfassen von dritten Musterbilddaten für ein drittes dreidimensionales Musterobjekt, wobei die dritten Musterbilddaten ein reales Bild des dritten dreidimensionalen Musterobjekts sind;
Bestimmen von dritten Muster-zweidimensionalen Projektionsinformationen des dritten dreidimensionalen Musterobjekts aus den dritten Musterbilddaten;
Erhalten von dritten Muster-dreidimensionalen Informationen des dritten dreidimensionalen Musterobjekts durch Durchführen einer Modellverarbeitung an den dritten Muster-zweidimensionalen Projektionsinformationen unter Verwendung des ersten Datenmodells, wobei die dritten Muster-zweidimensionalen Projektionsinformationen Objektkonturinformationen und Merkmalspunktinformationen des dritten dreidimensionalen Musterobjekts umfassen;
Durchführen eines Modelltrainings basierend auf den dritten Musterbilddaten und den dritten Muster-dreidimensionalen Informationen, um ein drittes Datenmodell zu erhalten, indem die dritten Musterbilddaten als Eingabedaten des zu trainierenden dritten Datenmodells und die dritten Muster-dreidimensionalen Informationen als Ausgabedaten des zu trainierenden dritten Datenmodells verwendet werden; und
Erhalten von Ziel-dreidimensionalen Informationen des dreidimensionalen Zielobjekts durch Eingeben der Zielbilddaten in das dritte Datenmodell.

2. Verfahren nach Anspruch 1, wobei das Erfassen von ersten Muster-zweidimensionalen Projektionsinformationen von einem ersten dreidimensionalen Musterobjekt umfasst:
Kennzeichen von Merkmalspunkten auf das erste dreidimensionale Musterobjekt,
Erzeugen von ersten Musterbilddaten für das erste dreidimensionale Musterobjekt, und
Bestimmen von ersten Muster-zweidimensionalen Projektionsinformationen des ersten dreidimensionalen Musterobjekts aus den ersten Musterbilddaten.

3. Vorrichtung zur Verarbeitung dreidimensionaler Informationen, umfassend:
Zielbilddatenerfassungsmodul, das dazu ausgebildet is, Zielbilddaten für ein dreidimensionales Zielobjekt zu erfassen, wobei die Zielbilddaten ein reales Bild des dreidimensionalen Zielobjekts sind;
Modul zur Erfassung von ersten Muster-zweidimensionalen Projektionsinformationen und ersten Muster-dreidimensionalen Informationen, das dazu ausgebildet is, die ersten Muster-zweidimensionalen Projektionsinformationen und die ersten Muster-dreidimensionalen Informationen von einem ersten dreidimensionalen Musterobjekt zu erfassen, wobei die ersten Muster-zweidimensionalen Projektionsinformationen Objektkonturinformationen und Merkmalspunktinformationen des ersten dreidimensionalen Musterobjekts umfassen;
Modul zur Beschaffung eines ersten Datenmodells, das dazu ausgebildet is, ein Modelltraining basierend auf den ersten Muster-zweidimensionalen Projektionsinformationen und den ersten Muster-dreidimensionalen Informationen durchzuführen, um ein erstes Datenmodell zu erhalten, indem die ersten Muster-zweidimensionalen Projektionsinformationen als Eingabedaten des zu trainierenden ersten Datenmodells und die ersten Muster-dreidimensionalen Informationen als Ausgabedaten des zu trainierenden ersten Datenmodells verwendet werden;
Modul zur Erfassung von dritten Musterbilddaten, das dazu ausgebildet is, die dritten Musterbilddaten für ein drittes dreidimensionales Musterobjekt zu erfassen, wobei die dritten Musterbilddaten ein reales Bild des dritten dreidimensionalen Musterobjekts sind;
Modul zur Bestimmung von dritten Muster-zweidimensionalen Projektionsinformationen, das dazu ausgebildet is, die dritten Muster-zweidimensionale Projektionsinformationen des dritten dreidimensionalen Musterobjekts aus den dritten Musterbilddaten zu bestimmen;
Modul zur Erhaltung von dritten Muster-dreidimensionalen Informationen, das dazu ausgebildet is, die dritten Muster-dreidimensionalen Informationen des dritten dreidimensionalen Musterobjekts durch Durchführen einer Modellverarbeitung an den dritten Muster-zweidimensionalen Projektionsinformationen unter Verwendung des ersten Datenmodells zu erhalten, wobei die dritten Muster-zweidimensionalen Projektionsinformationen Objektkonturinformationen und Merkmalspunktinformationen des dritten dreidimensionalen Musterobjekts umfassen;
Modul zur Beschaffung eines dritten Datenmodells, das dazu ausgebildet is, ein Modelltraining basierend auf den dritten Musterbilddaten und den dritten Muster-dreidimensionalen Informationen durchzuführen, um ein drittes Datenmodell zu erhalten, indem die dritten Musterbilddaten als Eingabedaten des zu trainierenden dritten Datenmodells und die dritten Muster-dreidimensionalen Informationen als Ausgabedaten des zu trainierenden dritten Datenmodells verwendet werden; und
Modul zur Erhaltung von Ziel-dreidimensionalen Informationen, das dazu ausgebildet is, die Ziel-dreidimensionalen Informationen des dreidimensionalen Zielobjekts durch Eingeben der Zielbilddaten in das dritte Datenmodell zu erhalten.

4. Computerlesbares Speichermedium, auf dem ein Computerprogramm gespeichert wird, wobei das Computerprogramm, wenn es von einem Prozessor ausgeführt wird, ein Verfahren zum Verarbeiten dreidimensionaler Informationen nach Anspruch 1 oder 2 implementiert.

## Revendications

1. Une méthode informatique mise en oeuvre pour traiter des informations tridimensionnelles, comprenant:
obtenir des données d'image cible pour un objet tridimensionnel cible, où les données d'image cible sont une image réelle de l'objet tridimensionnel cible ;
obtenir des premières informations de projection bidimensionnelle d'échantillon et des premières informations tridimensionnelles d'échantillon d'objets tridimensionnels d'échantillon, où les premières informations de projection bidimensionnelle d'échantillon comprennent des informations de contour d'objet et des informations de point caractéristique des objets tridimensionnels d'échantillon ;
effectuer une formation de modèle basée sur les premières informations de projection bidimensionnelle d'échantillon et les premières informations tridimensionnelles d'échantillon pour obtenir un premier modèle de données, en utilisant les premières informations de projection bidimensionnelle d'échantillon comme données d'entrée du premier modèle de données à former et les premières informations tridimensionnelles d'échantillon comme données de sortie du premier modèle de données à former ;
obtenir des données d'image d'échantillon pour des objets tridimensionnels d'échantillon, où les données d'image d'échantillon sont des images réelles des objets tridimensionnels d'échantillon ;
déterminer des troisièmes informations de projection bidimensionnelle d'échantillon des objets tridimensionnels d'échantillon à partir des données d'image d'échantillon ;
obtenir des troisièmes informations tridimensionnelles d'échantillon des objets tridimensionnels d'échantillon en effectuant un traitement de modèle sur les troisièmes informations de projection bidimensionnelle d'échantillon en utilisant le premier modèle de données, où les troisièmes informations de projection bidimensionnelle d'échantillon comprennent des informations de contour d'objet et des informations de point caractéristique des objets tridimensionnels d'échantillon ;
effectuer une formation de modèle basée sur les données d'image d'échantillon et les troisièmes informations tridimensionnelles d'échantillon pour obtenir un troisième modèle de données, en utilisant les données d'image d'échantillon comme données d'entrée du troisième modèle de données à former et les troisièmes informations tridimensionnelles d'échantillon comme données de sortie du troisième modèle de données à former ; et
obtenir des informations tridimensionnelles cibles de l'objet tridimensionnel cible en entrant les données d'image cible dans le troisième modèle de données.

2. La méthode selon la revendication 1, dans laquelle ladite obtention des premières informations de projection bidimensionnelle d'échantillon des objets tridimensionnels d'échantillon comprend :
marquer les points caractéristiques sur les objets tridimensionnels d'échantillon ;
générer des données d'image d'échantillon pour les objets tridimensionnels d'échantillon ; et
déterminer les premières informations de projection bidimensionnelle d'échantillon des objets tridimensionnels d'échantillon à partir des premières données d'image d'échantillon.

3. Un appareil pour traiter des informations tridimensionnelles, comprenant :
un module d'obtention de données d'image cible configuré pour obtenir des données d'image cible pour un objet tridimensionnel cible, où les données d'image cible sont une image réelle de l'objet tridimensionnel cible ;
un module d'obtention d'informations de projection bidimensionnelle d'échantillon et d'informations tridimensionnelles d'échantillon configuré pour obtenir des premières informations de projection bidimensionnelle d'échantillon et des premières informations tridimensionnelles d'échantillon d'objets tridimensionnels d'échantillon, où les premières informations de projection bidimensionnelle d'échantillon comprennent des informations de contour d'objet et des informations de point caractéristique des objets tridimensionnels d'échantillon ;
un module d'obtention d'un premier modèle de données configuré pour effectuer une formation de modèle basée sur les premières informations de projection bidimensionnelle d'échantillon et les premières informations tridimensionnelles d'échantillon pour obtenir un premier modèle de données, en utilisant les premières informations de projection bidimensionnelle d'échantillon comme données d'entrée du premier modèle de données à former et les premières informations tridimensionnelles d'échantillon comme données de sortie du premier modèle de données à former ;
un module d'obtention de données d'image d'échantillon configuré pour obtenir des données d'image d'échantillon pour des objets tridimensionnels d'échantillon, où les données d'image d'échantillon sont des images réelles des objets tridimensionnels d'échantillon ;
un module de détermination d'informations de projection bidimensionnelle d'échantillon configuré pour déterminer des troisièmes informations de projection bidimensionnelle d'échantillon des objets tridimensionnels d'échantillon à partir des données d'image d'échantillon, où les troisièmes informations de projection bidimensionnelle d'échantillon comprennent des informations de contour d'objet et des informations de point caractéristique des objets tridimensionnels d'échantillon ;
un module d'obtention d'informations tridimensionnelles d'échantillon configuré pour obtenir des troisièmes informations tridimensionnelles d'échantillon des objets tridimensionnels d'échantillon en effectuant un traitement de modèle sur les troisièmes informations de projection bidimensionnelle d'échantillon en utilisant le premier modèle de données ;
un module d'obtention d'un troisième modèle de données configuré pour effectuer une formation de modèle basée sur les données d'image d'échantillon et les troisièmes informations tridimensionnelles d'échantillon pour obtenir un troisième modèle de données, en utilisant les données d'image d'échantillon comme données d'entrée du troisième modèle de données à former et les troisièmes informations tridimensionnelles d'échantillon comme données de sortie du troisième modèle de données à former ; et
un module de détermination d'informations tridimensionnelles cibles configuré pour obtenir des informations tridimensionnelles cibles de l'objet tridimensionnel cible en entrant les données d'image cible dans le troisième modèle de données.

4. Un support de stockage lisible par ordinateur sur lequel un programme informatique est stocké, ledit programme informatique, lorsqu'il est exécuté par un processeur, met en oeuvre le procédé de traitement des informations tridimensionnelles selon la revendication 1 ou 2.
